# EUROPEAN PATENT SPECIFICATION

(11) **EP 2 352 382 B1**
(45) Date of publication and mention of the grant of the patent: **07.05.2014**
(21) Application number: 09824927.9
(22) Date of filing: 09.07.2009
(51) Int. Cl.: A23C 15/02, A23G 1/38, A23D 9/00, C11C 3/10

(54) **COCOA BUTTER EQUIVALENTS PRODUCED BY THE ENZYMATIC INTERESTERIFICATION PROCESS AND METHOD FOR PREPARING THE SAME**
MITTELS EINES ENZYMATISCHEN UMESTERUNGSVERFAHRENS HERGESTELLTE KAKAOBUTTERÄQUIVALENTE UND HERSTELLUNGSVERFAHREN
ÉQUIVALENTS DE BEURRE DE CACAO PRODUITS PAR LE PROCÉDÉ D'INTER-ESTÉRIFICATION ENZYMATIQUE ET LEUR PROCÉDÉ DE PRÉPARATION

(30) Priority: 07.11.2008 KR 20080110330
(43) Date of publication of application: 10.08.2011
(73) Proprietor: CJ CheilJedang Corporation, Jung-gu Seoul 100-749 (KR)
(72) Inventor: KANG, Ji-Hyun, Seoul 157-773 (KR); LEE, Sang-Bum, Seoul 152-070 (KR); SONG, Sang-Hoon, Gyeonggi-do Suwon 442-190 (KR); LEE, Ki-Teak, Daejeon 305-755 (KR)
(74) Representative: Duckworth, Timothy John
(86) International application number: PCT/KR2009/003761
(87) International publication number: WO 2010/053244

(56) References cited:
- EP-A2- 0 237 307
- WO-A1-2008/010543
- GB-A- 1 431 781
- JP-A- 9 316 484
- JP-A- 62 228 290
- KR-B1- 100 773 195
- KR-B1- 100 822 040
- US-A- 4 283 436
- US-A1- 2008 085 358

## Description

### Technical Field

The present invention relates to cocoa butter equivalents produced by the enzymatic interesterification reaction process and method for preparing the same, more specifically to a process for preparing hard butter having high SOS content by mixing oil for preparing butter with fatty acid or fatty acid ester, adding 1,3 regio-specific enzymes to the obtained mixture to carry out interesterification, distilling the obtained reactants to remove fatty aicd, ethyl ester, and monoglyceride and diglyceride formed after the reaction and fractionally extracting the obtained reactants to separate a solid phase, and to cocoa butter equivalents prepared by the hard butter and a process for preparing the same in which the cocoa butter equivalents can replace existing import cocoa butter equivalents with 1:1 because of its equivalent chemical properties, and have no difference in taste and properties with natural cocoa butter and also have lower trans fatty acid.

### Background Art

Cocoa butter which is natural fatty component from Theobroma cacao, is contained in Theobroma cacao in amount of 50 to 55% and defined by the Food and Drug Administration(FDA) as an edible fat obtained before or after roasting of well-matured Theobroma cacao. The cocoa butter is valuable in aspect of excellent fragrance and specific physical properties which is lacking in other oil and fats. The cocoa butter is hard below the room temperature and is rapidly dissolved at the body temperature to endow fresh fine appearance. In addition, because it is extremely stable for oxidation, the cocoa butter can be suitable for using in food such as chocolate which is preserved for a long time. The cocoa butter has melting point of 32 to 35 °C. The cocoa butter has varied hardness in accordance with growing district, in which a Malaysia growth is most hard, a Brasil growth is most soft and a Ghana and a Cd'Ivoire is the middle.

The cocoa butter comprises 99% of triglyceride, below 1% of monoglyceride and diglyceride, 0.2% of sterol and 150 to 250 ppm of tocopherol. The cocoa butter has saponification value of 188 to 195, iodine value of 34 to 41 and unsaponifiable matter of 0.3 to 0.8%.

Especially, the cocoa butter, unlike other fats or oils, comprises above 80% of three of major fatty acid, such as palmitic acid, stearic acid and oleic acid, and above 75% of symmetric triglyceride structure in which oleic acid is bond to 2 position of triglyceride and palmitic acid and stearic acid are bond to 1, 3 positions of triglyceride. The major symmetric oil is consisted of 34 to 39 mol% of palmitic acid-oleic acid-stearic acid (POS), 23 to 30 mol% of stearic acid-oleic acid-stearic acid (SOS) and 14 to 17 mol% of palmitic acid-oleic acid-palmitic acid (POP), and thus above 80% of oleic acid is being on 2 position of triglyceride.

The cocoa butter is used in the ice-cream and the confectionery industry as well as in the production of chocolate. The cocoa butter obtained by the mechanical compression lipid of light yellow showing hard properties at below 20°C, and have about 80% of solid fat content at room temperature, and is softened at 30 to 32°C and is melted at 32 to 35°C. As above mentioned, symmetric structure of triglyceride in cocoa butter is a factor to endow keen melting point to chocolate.

Since it is consisted of single triglyceride, the cocoa butter shows characteristic polymorphism in the solidification by cooling. Chocolate divide into six kinds of crystal form such as I type to VI type and their melting point are increased in order from 16°C to 36°C. V type of chocolate (melting point : 34 to 35°C) which is stable as chocolate, is obtained by tempering, and VI type of chocolate(melting point: 36°C) is a major component in bloom crystal. Recently, two types of α, γ and β' or β crystal form, respectively, which is total six types of crystal form, have been reported. V and VI type are β crystal.

Generally, chocolate is consisted of less than 50% of sugar, about 30 to 50% of cacao and about 30% of pre-fat containing oil. Especially, chocolate oil effects on melting property(property of melting in mouth). Chocolate and its related product market are continuously increased, however natural cocoa butter is expensive and has high fluctuation of price because of a short supply. Accordingly, a various development for substitute oil is in progress in accordance with use of cocoa butter.

Since it is expensive, the cocoa butter is used only a small amount in total oil necessary for the production of chocolate and other vegetable oil is made up as cocoa butter substitute oil which is called as hard butter. Accordingly, quality of cocoa butter substitute oil control that of chocolate and such cocoa butter substitute oil can substitute for natural cocoa butter with 1:1 in properties and chemical composition.

The cocoa butter substitute oil can largely be divided into Cocoa Butter Equivalent (CBE), Cocoa Butter Replacement(CBR) and Cocoa Butter Substitute (CBS).

The Cocoa Butter Equivalent(CBE) has triglyceride composition similar to natural cocoa butter and is superior to compatibility and also is necessary for tempering. Palm Middle Fraction oil(PMF), illepe fat, shea fat, sal fat and kokum fat come under the category of the CBE. It can be obtained oil similar to cacao butter by mixing PMF which is rich in palmitic acid than cocoa butter and cocoa butter equivalent which is rich in stearic acid. The cocoa butter equivalent can substitute for natural cocoa butter in the production of chocolate without difference in aspect of taste, properties et al. That is, the cocoa butter equivalent in comparing with natural cocoa butter, has no difference in texture, flavor and taste. Such kind of oil is in demand in Europe Union annually in amount of 15 thousands ton and have been used in the whole world instead of natural cocoa butter.

Cocoa Butter Replacement(CBR) which is made by dehydrogenating soybean oil, canola oil and palm oil, can substitute for natural cocoa butter to a certain extent and is not necessary for tempering. Trans fatty acid which is much formed in the dehydrogenation process, has high melting point and a increased solid content and thus its gradient of SFC curve is increased and oxidative stability is also increased such that it is similar to natural cocoa butter, however its masticating feeling is soft and there is no hard sense in chocolate. The Cocoa Butter Replacement can be used in the production of chocolate in amount of about 15% instead of natural cocoa butter.

Cocoa Butter Substitute(CBS) which is dehydrogenated lauric oil, is not compatible with natural cocoa butter and not necessary for tempering. The Cocoa Butter Substitute is suitable for confectionery coating and is generally used in dehydrogenated oil of palm nucleic oil and palm oil or transesterification and sometimes is mixed with other hydrogenated vegetable oil.

In a method for preparing cocoa butter substitute oil, there is a method for obtaining by mixing oils which are fractional distilled from palm, illepe and shea fat and a method for obtaining by the ester exchange reaction with catalyst.

The ester exchange reaction is that newly formed ester is obtained by reacting ester with alcohol, acid or other glyceride, which is divided into interesterification which is a reaction of the same kind and transesterification which is a reaction of the different kind. Such reactions use chemical catalyst or biological catalyst, enzyme to exchangeablely rearrange glyceride and acyl group and thus glyceride composition, that is chemical composition of glyceride is changed and also physical properties such as melting point and solid fat content is changed.

The ester exchange reaction is directly related with characteristics of edible oil such as savor, heat stability and nutritional property, especially is most important in that it can improve oil into oil having properties suitable for application object.

Interesterification is divided into Chemical interesterification(CIE) and Enzymatic interesterification(EIE) based on catalyst being used. Since there is no need to add any chemical reagent and no formation of harmful by-product, EIE which is not need to add any chemical reagent and is formed none of harmful by-product, is a reforming technique which eco-friendly induces melting point inflection curve, and oil produced by EIE has high triglyceride content an thus it can be used for cooking. However, CIE, as using chemical catalyst, bring about oil loss in the procedure for removing residue sodium soap and is necessary for introducing subsequent purification procedure due to a change of oil color and a residual diacylglycerols (DAG) which are occurred according to the process characteristics. Further, as EIE is occurred at low temperature and has higher reaction particularity compared to CIE, it has a advantage that not only natural antioxidant materials such as tocopherol contained in oil are kept in high level, but the change of fatty acid structure can be achieved through the expression of particularity in EIE which is not embodied by CIE.

Accordingly, it is the worldwide improvement that "enzymatic interesterification technique" which is eco-friendly biomethod is used to produce a high value-added oil product and products having the diversity of use including the cooking use.

For a few year, many researchers have been reported that "enzymatic interesterification technique" was proved to have effect on controlling the solid fat value of oil. However, until recently, such technique did not applied besides to expensive products because of excessive enzyme cost rising occurred by increasing cost of fixation. However, enzymatic interesterification technique can be used for producing industrial bulk oil such as margarine as drastic improvement of fixation technique. The enzymatic interesterification technique can produce the most suitable product in the respect of functionality and health orientation.

The major advantage of enzymatic interesterification technique is that the firstly, process is simple and can be easily controlled, and secondly, a various modification can be endowed to the product, thirdly trans fatty acid does not formed and fourthly more natural product can be produced.

At present, seven nations in Europe Union including England provide that it can be possible to add vegetable oil other than cocoa butter in amount of up to 5% to chocolate as a component of chocolate. Japan and Korea prescribe in the fair competition rules of the industry for a standard of chocolate that chocolate should be contained above 35% of cacao component and above 18% of cocoa butter. Accordingly, vegetable oil which can replace of cocoa butter, may be used within the limits of the rules.

The Cocoa Butter Equivalent(CBE), one of cocoa butter substitute oil, can completely replace natural cocoa butter, and thus even an expert may not make clear the difference between the final products. Accordingly, it can be possible to prepare chocolate by mixing a costly natural cocoa butter and cocoa butter equivalent(CBE). As a worldwide trend, demand for cocoa butter equivalent is increased since a product which is prepared by mixing cocoa butter equivalent in amount of up to 5% with natural cocoa butter legally recognized as chocolate. However, since the whole quantity of cocoa butter equivalent(CBE) which is distributed in Korea at present is dependant on import, it is urgent question to develope cocoa butter equivalent(CBE).

In the prior art, Seng-Heon Yoon et al. disclosed in "Sturies of the development of cocoa butter equivalent fat by reverse-micelle enzyme reaction system" (Korean J. Food Sci. Technol. Vol. 24, No. 2, pp. 111-116, 1992) that they studied production of cocoa butter equivalent fat from palm oil and stearic acid by interesterification of Rhizopus arrhizus lipase in reverse micelle reaction system, and performed qualitative and quantitative analyses of triglyceride by HPLC and thus they found that when a molar ratio of water/Aerosol OT in model reaction of triolein and stearic acid was changed to 10, that is, three times amount of stearic acid was added to 30 mM of triolein, it is showed the maximum conversion rate and also it is showed the maximum conversion rate at pH 7.5 and 50°C, and when palm oil and stearic acid were used as substrate, it is showed a tendency to reduce an amount of POP, POO and SOO, and to form and increase that of POS and SOS on the other hand, and they reported that riglyceride composition such as POP, POS, SOS et al. in the obtained cocoa butter equivalent fat were similar to that of natural cocoa butter compared to cocoa butter substitute fat.

Korean Patent Application No. 10-1992-0013238 which is entitled with "method for making cocoa butter equivalent fat", discloses method for making cocoa butter equivalent fat by dissolving 1.5 to 2.5 wt% of A.O.T into hexane to make solution and adding 0.9 to 6 wt% of edible oil and 0.1 to 6 wt% of fatty acid to the solution and then adding 1,3 regiospecific lipase solution to the solution to make reverse micelle and performing the interseterification.

Korean Published Patent No. 10-1996-0001494 which is entitled with "method for making cocoa butter equivalent fat", discloses a method for making cocoa butter equivalent fat comprising the steps of (a) preparing a fixed lipase by directly covalent bonding lipase to hydrophobic carrier or by covalent bonding with hydrophobic spacer in oder to bond lipase to hydrophobic carrier with covalent bond; (b) dissolving mixture of stearic acid and triolein or mixture of stearic acid and palm oil into hexane; (c) reacting the fixed lipase of (a) with the substrate solution of (b).

Korean Patent No. 10-0773195 which is entitled with "a composition of oil and fat and method for producing CBR having lower trans fatty acid content thereof", discloses oil composition and method for producing cocoa butter replacement having lower trans fatty acid by using the same in which cocoa butter replacement having lower trans fatty acid is prepared by mixing two kinds of oil having suitable fatty acid composition and performing the interesterification or the selective hydrogenation to prepare cocoa butter replacement having lower trans fatty acid content and thus chocolate or chocolate product produced with the cocoa butter replacement showed good taste and heat-resistant as well as excellent process quality with above 20% of compatibility with cocoa butter and a reduced induction potentiality of cadiovascular diseases.

In the present invention, we used a continuous process which is advantageous in yield and purity for process operation without using a chemical organic solvent including hexane, and used a reaction temperature of 40 to 45°C and fatty acid materials of ester type having good reactivity, and also prepared SOS hard butter with high purity by convenient processes than the prior art with recycling byproduct in extraction process, such that we studied cocoa butter equivalent having lower trans fatty acid prepared by the enzymatic interesterifiaction and method for preparing the same in which the cocoa butter equivalents can replace existing import cocoa butter equivalents with 1:1 because of its equivalent chemical properties, and have no difference in taste and properties with natural cocoa butter and also have lower trans fatty acid.

### Disclosure of Invention

### Technical Problem

The object of the present invention is to provide hard butter having lower fatty acid and above 85% of SOS content in triglyceride structure prepared by the enzymatic interesterification, and method for preparing the same.

Another object of the present invention is to provide cocoa butter equivalent prepared with the hard butter, and method for preparing the same.

### Technical Solution

In one embodiment, the present invention relates to a method for preparing hard butter containing above 85% of SOS comprising the steps of
(a) mixing oils for preparing the hard butter with fatty acid or fatty acid ester;
(b) adding 1,3 regiospecific enzymes to the mixture obtained in the step of (a) to perform an interesterification reaction;
(c) distilling the reactants obtained in the step of (b) to remove fatty acid, ethyl ester, and monoglyceride and diglyceride formed after the reaction; and
(d) fractionally extracting the reactants obtained in the step of (c) to separate solid phase.

In the method for preparing hard butter according to the present invention, the oils for preparing hard butter can be used all of solid fat, hard butter or liquid oil well known in the art, preferably oil or combination of two or more oils selected from the group consisting of completely hydrogenated soybean oil, completely hydrogenated suet, palm oil, palm stearin oil, palm olein oil, palm nuclei oil, palm nuclei olein oil, hydrogenated coconut oil, coconut oil, sal fat, sal stearin oil, kokum fat, shea butter, shea stearin oil, cottonseed stearin oil, soybean oil, corn oil, cottonseed oil, rape seed oil, canola oil, sunflower oil, safflower oil, grape seed oil or olive oil. More preferably, it can be used one or more selected from the group consisting of higholeic sunflower oil, higholeic canola oil, higholeic soybean oil, higholeic corn oil or higholeic safflower oil.

The oil for preparing hard butter and fatty acid or fatty acid ester from stearic acid can be mixed in the ratio of 1 : 2 to 1 : 6, and it is preferred that the butter oil has below 0.02% of water content.

In the method for preparing hard butter according to the present invention, interesterification of the step of (b) is carried out with continuous single process. It is advantageous that the process can provide convenience in the reaction process compared to the conventional bach type process because it carried out with continuous process, and it can maintain good productivity and obtain reaction oil with high yield because it is not overloaded to enzyme. It is preferred to use lipase from muhigh as 1,3 regiospecific enzyme which is used in the interesterification reaction. At this time, it is preferred to carried out the continuous process at the temperature of 40 to 50°C.

In the method for preparing hard-butter according to the present invention, the step of (c) is the distillation process that reaction oil obtained from the interesterification reaction is distilled by molecular distiller. By the process, it can be removed fatty acid, ethyl ester, and monoglyceride and diglyceride formed after reaction. It can be obtained below 1% of monoglyceride and diglyceride content of reaction oil after the distillation process. It can be recycled the separated fatty acid and ethyl ester in the enzymatic interesterification reaction after the dehydrogenation.

In the method for preparing hard butter according to the present invention, by the step of (d), it can be obtained oil containing above 85% of SOS content in triglyceride structure by separating solid phase through the fractional extraction after the enzymatic interesterification reaction (step b) and the distillation(step c). And also, liquid phase from the fractional extraction can be separated to recycle in the enzymatic interesterification reaction. At this time, it is necessary to control triglyceride composition to adjust the synthetic reaction condition. Acetone is a referred solvent which can be used in wet fractional extraction of the above step.

By the step of the extraction, it can be obtained hard butter containing high content by percent of POP triglyceride and triglyceride having above 85% of SOS content.

The hard butter prepared by the method according to the present invention is advantageous in that the process step is convenient and reaction oil can be obtained with high yield by the enzymatic interesterification reaction with single step than with more than two steps. In addition, monoglyceride and diglyceride content can be controlled in amount of below 1% through the step of the distillation and hard butter containing above 85% of SOS content can be obtained through the step of the extraction. And also, all of byproduct formed from the steps of the fractional extraction and the distillation can be recovered to recycle in the continuous enzymatic interesterification reaction and this contributes to improve yield and purity.

In another embodiment, the present invention is to prepare cocoa butter equivalents by mixing the hard butter prepared by the above method and natural oil containing above 80% of POP with appropriate ratio to have properties suitable for the use.

In a further embodiment the invention provides a coca butter equivalent prepared by the process according to the present invention in which solid fat content in the cocoa butter equivalent is 82 to 90% at 10°C, 40 to 45% at 20°C, 9 to 14% at 25°C, 1 to 4% at 30°C and 0 to 0.50% at 35°C.

In addition, since trans fatty acid is not formed in the enzymatic interesterification, the cocoa butter equivalent prepared by the above process has below 0.1 % of trans fatty acid.

The cocoa butter equivalents prepared by the process of the present invention has above 99% of triglyceride content and below 1% of monoglyceride content, and less than 0.1% of lower lauric fatty acid content.

Because the cocoa butter equivalents prepared by the process of the present invention is equivalent to imported cocoa butter equivalent and natural cocoa butter in chemical composition and properties, it can replace them with 1:1 and also it can be used in the preparation of chocolate instead of natural cocoa butter without the difference in taste, properties et al., with natural cocoa butter.

### Advantageous Effects

The process for preparing cocoa butter equivalents of the present invention uses the continuous enzymatic interesterification in preparing oil of rich SOS, which is convenient in the reaction process than the conventional batch type process and can increase yield and purity of reaction and simplify processibility by separating triglyceride via molecular distillation and also can obtain hard butter containing desired triglyceride structure with high purity and yield by the selective extraction using solvent et al. Cocoa butter equivalents having similar triglyceride composition of natural cocoa butter is prepared by mixing the hard butter obtained by the process and various oil. Because the cocoa butter equivalents prepared by the process of the present invention is equivalent to import cocoa butter equivalent and natural cocoa butter in chemical composition and properties, it can replace them with 1:1 and also it can be used in the preparation of chocolate instead of natural cocoa butter without the difference in taste, properties et al.

### Brief Description of Drawings

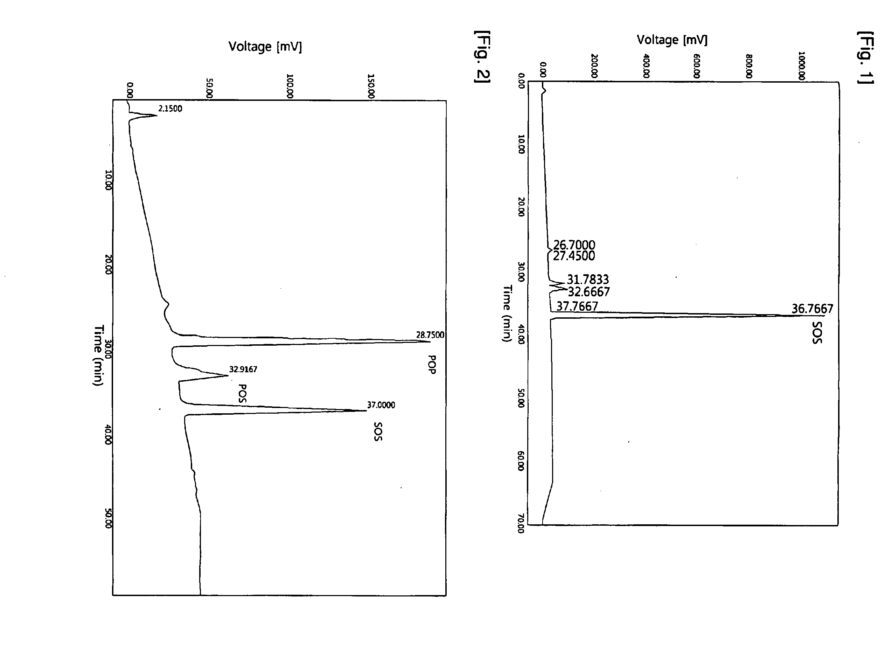

Figure 1 is showing to the result of HPLC analysis for triglyceride in hard butter which is carried out distillation and fractional distillation after the enzymatic interesterification. SOS content in the figure is above 85%.
Figure 2 is showing to the result of HPLC analysis for triglyceride in cocoa butter equivalent prepared by mixing hard butter of the present invention and natural hard butter et al. Major peak in the figure is represented POP, POS and SOS which are symmetric triglyceride.
Figure 3 is showing to the result of DSC for cocoa butter equivalent of the present invention and conventional cocoa butter equivalent.
Figure 4 is a graph showing to change of solid fat content in cocoa butter equivalent of the present invention and conventional cocoa butter equivalent according to temperature.

### Best Mode for Carrying out the Invention

In the following examples, the present invention is explained more specifically. However, the examples was only to explain the present invention, the scope of the present invention is not restricted by them.

### Example 1: Selection of enzyme

Lipozyme TLIM(Novozymes, Denmark) which is lipase from *Termomyces Lanuginosus,* is fixed into porous silica granule and is oil insoluble.

In the present example, TLIM and Lipozyme RMIM(Novozymes, Denmark) well known in the art were reacted with the same substrate in order to compare with their properties.

Table 1

**[Table 1]**

| [Table ] | | | | |
|---|---|---|---|---|
| (area ratio : %) | | | | |
| | DG | SOO | SOS | SSS |
| TLIM | 1.4 | 32.4 | 49 | 3.7 |
| RMIM | 14.4 | 34.2 | 39 | 2.3 |

### DG : Diglyceride, S : Stearic acid, O : Oleic acid

As a result of the reaction, the activity of RMIM was lower than that of TLIM. As shown in the Table 1, in the composition of triglyceride in reactants after the reaction for 24 hours, RMIM contained more diglyceride than TLIM. Therefore, it can be known that TLIM is more stable and effective than RMIM in the respect of economical efficiency and conditions for the enzymatic interesterification.

### Example 2 : Search for the possibility of interesterification by the selected enzyme

In the present example, batch reaction was carried out with a compound oil mixed hioleic oil with stearic acid in the molar ratio of 1:2 to 1:6 in oder to search for the possibility of interesterification by the selected Lipozyme TLIM of the example 1. The reaction temperature was 45 to 50°C.

In order to verify reactivity by hexane solvent, assay for melting point according to reaction time and structure of triglyceride in oil was performed with or without the addition of solvent. And also, melting point before and after the interesterification with enzyme was measured with melting point apparatus, and an amount of SOS triglyceride structure in oil was measured with Reversed Phase Liquid Chromatography-Evaporative Light Scattering Detector. Melting point of process oil before the reaction was 25 to 28°C, and that of after the reaction was 29 to 32°C. As a the result of assay by the time, triglyceride structure contained 30 to 35% of SOS content after 9 hours of reaction time (Table 2). In addition, there was no difference in reactivity with or without the addition of hexane solvent. Stearic acid-stearic acid-stearic acid(SSS) triglyceride which was migrated via overreaction of the reactants should be below 1%.
Table 2

**[Table 2]**

| [Table ] | | |
|---|---|---|
| Reaction for 9 hours | Addition of hexane solvent | No addition of hexane solvent |
| OOO | 6.1 | 7.3 |
| SCO | 46.2 | 45.4 |
| SOS | 35.2 | 34.8 |
| SSS | - | - |

### Example 3 : Removal of fatty acid, monoglyceride and diglyceride by the distillation

In the present example, unreacted fatty acid, ester and monoglyceride and triglyceride formed after reaction were removed from reaction oil prepared by the enzymatic interesterification with molecular distiller. The reaction was carried out at 1 x 10⁻³ mbar and 200 °C. Amounts of monoglyceride and diglyceride in reaction oil after distillation should be below 1%. And also, the distilled fatty acid, ester et al. could be reused in the enzymatic interesterification through the dehydrogenation process.

### Example 4 : Extraction by fractional distillation

In the present example, oil containing above 85% of SOS content in triglyceride structure was prepared using wet fractional distillation and dry fractional distillation with a single solvent, acetone.

With the fractional distillation process, oil was extracted into solid and liquid phase. At this point, SOS content in solid phase of triglyceride was above 85% which was analyzed with Reversed Phase Liquid Chromatography-Evaporative Light Scattering Detector.

As a result of the analysis for solid phase triglyceride structure separated by the extraction, SOS content necessary for the present invention was above 85%. As a result of the analysis for liquid phase triglyceride structure, above 80% of triglyceride was unreacted stearic-aid-oleic aid-oleic acid (SOO) and oleic aid-oleic aid-oleic aid(OOO). The unreacted triglyceride could be recovered and reused in the enzymatic interesterification. Such process contributes to increase a purity and yield of reaction.

### Example 5 : Preparation of cocoa butter equivalents(CBE) with synthetic SOS oil

In the present example, cocoa butter equivalents was prepared by mixing reaction oil having above 80% of triglyceride of SOS structure in the enzymatic interesterification oil and hard butter having high content of palmitic acid-oleic acid-palmitic acid(POP) triglyceride in oil. The cocoa butter equivalents should be had above 85% of SUS(S : Saturate, U : Unsaturate) symmetrical triglyceride structure. This influence on physical and chemical properties of oil and also such structure effect on fine appearance which is characteristic of cocoa butter and cocoa butter equivalents.

With hard butter prepared by the examples 1 to 5, experiments were performed as follows:

### Experimental example 1: Analysis of physical properties by Differential Scanning Calorimeter(DSC)

In the present experimental example, melting profile was measured with differential scanning calorimetry(DSC) after and before the reaction, by which possibility of reaction can be achieved. The experimental conditions were shown in Table 3.
Table 3

**[Table 3]**

| [Table ] | |
|---|---|
| DSC apparatus | TA Q20 |
| Experimental temperature | -60 to 80°C |
| Cooling rate | 10°C/min (down to -80°C) |
| Temperature increasing rate | 5°C/min (up to 100°C) |
| Amount of sample | 15±5mg |

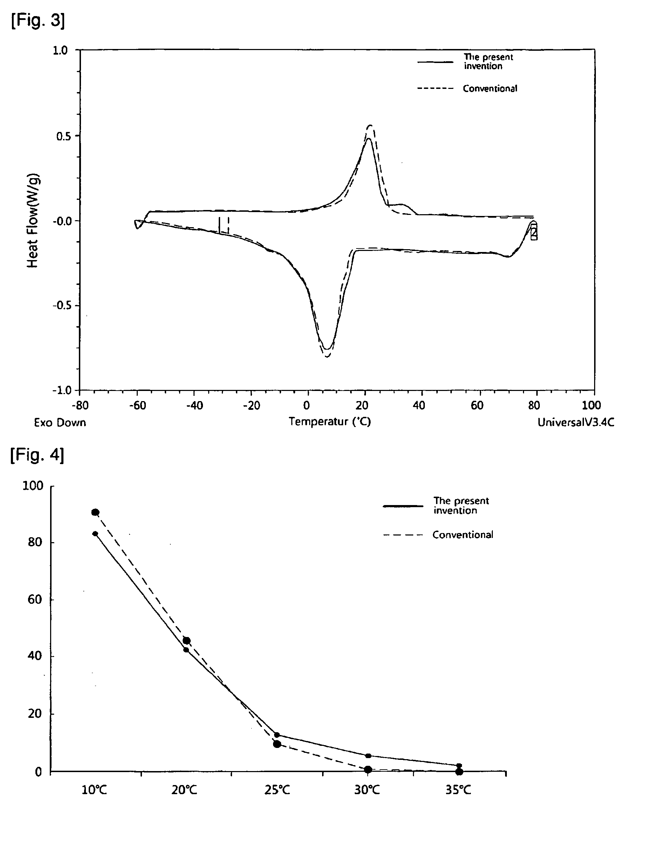

In the experiment with DSC, entire phase change can be archived at the temperature of -60 to 80°C. As a result, the data of the present invention were corresponded to that of a conventional cocoa butter equivalents. The result of experiment were shown in Figure 3.

### Experimental example 2: Analysis of solid fat content with Nuclear Magnetic Resonance(NMR)

In the present experimental example, solid fat content was analyzed with Nuclear Magnetic Resonance(NMR). The condition of the analysis was shown in Table 4. Nuclear Magnetic Resonance(NMR) was used for the analysis of solid fat content, and Parallel Method was used as the experiment method. Six samples gone through the enzymatic interesterification were prepared and were pretreated by melting at 100°C and then leaving at 60°C for 5 minutes and at 0°C for 60 minutes. The pretreatment was performed for about 80 minutes. The samples were measured after leaving for 30 minutes in Celsius bath-metal block thermostat preset with the temperature of 10.0°C, 20.0°C, 25.0°C, 30.0°C and 35.0°C, respectively. The measurement was performed for about 6 seconds.
Table 4

**[Table 4]**

| [Table ] | |
|---|---|
| NMR apparatus | BRUKER, the minispec |
| Frequency | 60MHz |
| Amount of sample | 6mℓ |
| Pretreatment temperature | 100metal block thermostat, 0°C |
| Experimental temperature | 10.0°C, 20.0°C, 25.0°C, 30.0°C, 35.0°C |

The result of the solid fat contents(SFC) for natural fat known to cocoa butter equivalents, cocoa butter equivalents widely used as usual, hard butter and cocoa butter equivalents synthesized by the present invention were shown in Table 5.
Table 5

**[Table 5]**

| [Table ] | | | | | |
|---|---|---|---|---|---|
| | 10 °C | 20 °C | 25 °C | 30 °C | 35 °C |
| Hard butter of the present invention | 76.6 | 63.4 | 46.2 | 20.4 | 6.1 |
| Cocoa butter equivalents of the present invention | 83.2 | 42.3 | 12.8 | 5.5 | 1 |
| Conventional cocoa butter equivalents | 90.5 | 45.7 | 9.4 | 0.7 | 0.5 |
| Illipe butter | 93.7 | 74.9 | 26.5 | 1.3 | 0.5 |
| Sal butter | 87 | 78.4 | 64.4 | 21 | 0.9 |
| Shea butter | 77.6 | 62.3 | 51 | 7.9 | 2.5 |
| PMF | 94.2 | 81 | 48.9 | 5.5 | 0 |

As shown in the result of Table 5, it could be known that hard butter of the present invention had property similar to that of sal butter stearin fractional oil. In the Table 5, illipe butter, sal butter and shea butter was known as natural cocoa butter equivalents. The natural cocoa butter equivalents are not economical because their annual crop is irregular and they are expensive. In the present invention, we prepared hard butter having similar properties with those natural cocoa butter equivalents through the enzymatic interesterification, and prepared cocoa butter equivalents by using the same, and also could confirmed that it can substitute for conventional cocoa butter equivalent with 1:1.

### Experimental example 3: Analysis for the determination of melting point

In the present experimental example, analysis for the determination of melting point was performed in accordance with the conditions listed in Table 5. Analysis for melting point was performed as a method capable of rapidly determining degree of reaction and physical properties after mixing with substrate. The determination of melting point was performed with EX-871 auto-increasing melting point measuring apparatus. As a sample for the determination, completely melted fat was filled in a capillary tube to the extent of about 1 cm and the capillary tube was put into a stand and placed in a refrigerator for 10 minutes. Distilled water which was preliminary prepared at 10°C, was put into water-bath of the melting point measuring apparatus and the prepared sample was put into a sensor to determine melting point of it. Temperature was increased at a rate of 2°C/min between 10 and 25°C and at a rate of 0.5°C/min above 25°C, respectively.
Table 6

**[Table 6]**

| [Table ] | |
|---|---|
| Apparatus | EX-871 autoincreasing melting point measuring apparatus |
| Increasing rate of temperature | 0.5°C/min |
| Number of sample | 8 |
| Pre-treating condition | -5°C(10 minutes) |
| Detecting method | Special photoelectric sensor detecting method |
| Heating apparatus | Special coil-type heating heater 400W |
| Stirring apparatus | variable speed type motor |

Melting point is closely related with fine appearance among properties of oil. Especially, oil for chocolate should be stable in the course of distribution in normal temperature and had melting point capable of melting in a mouth at a moment of eat. Thus, the melting point is important factor among physical properties of oil together with solid fat content of the experimental example 2. The melting point of conventionally used cocoa butter equivalents is normally about 34°C. The hard butter prepared by the synthesis of the present invention was characterized in having melting point of 39 to 40°C, and cocoa butter equivalents prepared by mixing with PMF was resulted in having melting point of 35°C. The result of melting point experiment was shown in Table 7.
Table 7

**[Table 7]**

| [Table ] | |
|---|---|
| | Melting point (°C) |
| Hard butter | 39.3 |
| Cocoa butter equivalent of the present invention | 35 |
| Conventional cocoa butter equivalent | 34 |
| Illipe butter | 28.6 |
| Shea butter | 32.9 |
| Sal butter | 34.6 |
| PMF | 31.7 |

### Experimental example 4: Analysis for fatty acid by GC

In the present experimental example, analysis for fatty acid was performed using gas chromatograph in accordance with the conditions listed in Table 8. Composition of trans fatty acid and fatty acid was analyzed with the following conditions. Lipid Standard of SIGMA was used as standard and all of reagent for analysis was special grade. In order to methylate each of sample gone through the enzymatic interesterification, 1.5 mL of 0.5N NaOH-methanol solution was added to 0.025mg of each sample and heated for about 5 minutes on the heating-block and cooled at 30 to 40°C in thermostat. And then, 2 mL of BF3-methanol solution was added and heated for 30 minutes on heating-block, and then cooled at 30 to 40 °C in thermostat. 1 to 2 mL of iso-octane and saturated NaCl solution was added and mixed, and left them. Supernatant was separated and dehydrated with dehydrate sodium sulfate to use as analysis sample.
Table 8

**[Table 8]**

| [Table ] | |
|---|---|
| Apparatus | Agilent, 7890N GC |
| Column | SPTM-2560(Fused-silica capillary column) 100m×0.25mm I.d., 0.2um |
| Detector | FID(Flame Ionization Detector) |
| Amount of sample | 1*µ*ℓ |
| Injector temperature | 250°C |
| Detector temperature | 280°C |
| Oven temperature | 180°C |
| Carrier gas | He₂(1mℓ/min) |

Fatty acid content of hard butter and cocoa butter equivalent prepared with the enzymatic interesterification in the present invention, natural cocoa butter equivalents and conventional cocoa butter equivalents were analyzed with gas chromatograph. The result of analysis was shown in Table 9. As a result of analysis, there was no lower fatty acid, lauric acid, and thus it could be known that all of trans fatty acid was characterized in amount of below 0.1%. Accordingly, it could be known that there was no formation of trans fatty acid during the enzymatic interesterification in the present invention.
Table 9

**[Table 9]**

| [Table ] | | | | | | | |
|---|---|---|---|---|---|---|---|
| | Hard butter | Cocoa butter equivalent of the present invention | Conventional cocoa butter equivalent | Illipe butter | Shea butter | Sal butter | PMF |
| Lauric 12:0 | - | - | - | - | - | - | 0.07 |
| Myristic 14:0 | - | - | 0.53 | - | 0.02 | - | 0.81 |
| Palmitic 16:0 | 3.68 | 32.73 | 34.73 | 18.42 | 3.5 | 4.65 | 56 |
| Stearic 18:0 | 61.81 | 29.11 | 26.75 | 44.04 | 8.9 | 49.97 | 6.02 |
| Oleic 18:1 | 31.06 | 35.05 | 33.4 | 33.65 | 78.8 | 34.85 | 32.65 |
| Linoleic 18:2 | 2.05 | 2.11 | 3.05 | 1.85 | 6 | 1.09 | 3.19 |
| Trans fatty acid | - | - | 0.02 | - | 0.1 | - | - |

### Experimental example 5: Analysis for triglyceride structure

In the present experimental example, triglyceride structure was analyzed in accordance with the conditions listed in Table 10. Triglyceride structure in fat was analyzed with the following experiment. Triglyceride structure of cocoa butter equivalent was analyzed with Reversed Phase Liquid Chromatography-Evaporative Light Scattering Detector system. 30µℓ of sample and 10mℓ of hexane were added and filtered with PEFE syringe filter(25mm, 0.2µm) and then put into 2mm vial and 100µℓ of sample was injected with auto-sampler. Acetonitrile(solvent A) and hexane/ isopropanealcohol(solvent B) were used as solvent and flow rate was 1 mℓ/min. During total 70 minutes, a gradient eluting (A:B, v:v) process of solvent was maintained with 80:20 for 45 minutes and changed to 54:46 to 60 minutes and then maintained with 80:20 between 60 and 70 minutes.
Table 10

**[Table 10]**

| [Table ] | |
|---|---|
| Apparatus | Agilent, 1200 HPLC Chemstation |
| Column | NOVA-pack C18 60Å 4*µ*m (3.9 x 150mm, Waters) |
| Detector | Alltech, ELSD(Evaporative Light Sacttering Detector) |
| Amount of sample | 100*µ*ℓ |
| Solvent | Acetonitrile: hexane/isopropylalcohol gradient solvent system |
| Detector gain | 1 |
| Detector oven temperature | 80°C |
| Carrier gas | N₂(1.5L/min) |

In the present invention, analysis for triglyceride structure is very important. A position of triglyceride in fatty acid is changed via the enzymatic interesterification in which triglyceride structure determines physical and chemical properties of fat. Especially, cocoa butter or cocoa butter equivalent is characterized in comprising above 90% of triglyceride structure of SUS (S: Saturate, U : Unsaturate) symmetric structure.

Accordingly, experiment for the analysis of triglyceride structure should be carried out after the process of synthesis, separation and extraction.
Table 11

**[Table 11]**

| [Table ] | | | | | | | |
|---|---|---|---|---|---|---|---|
| | Hard butter | Cocoa butter equivalent of the present invention | Conventional cocoa butter equivalent | Illipe butter | Shea butter | Sal butter | PMF |
| OOO | - | - | - | - | 5 | 3 | - |
| POO | - | - | - | - | 8 | 4 | 4.5 |
| SOO | 1 | 1.0 | 1.2 | 3 | 27 | 16 | - |
| POP | - | 48.4 | 48.4 | 7 | - | 1 | 83.4 |
| POS | 8.2 | 12.1 | 9.5 | 35 | 5 | 11 | 11.3 |
| SOS | 90.3 | 38.7 | 41 | 45 | 40 | 42 | 0.7 |
| SSS | 0.8 | - | - | - | - | - | - |
| SOAr | - | - | - | 4 | 2 | 13 | - |

### Experimental example 6: Analysis by TLC-FID

In the present experimental example, analysis by TLC-FID was carried out according to conditions shown in Table 12 to measure content of diglyceride, triglyceride et al.

Consent of diglyceride, monoglyceride and triglyceride can be obtained by TLC-FID. TLC-FID is an apparatus capable of carrying out quantitative and qualitative analysis for organic mixture separated on TLC. Special grade reagent from SIGMA was used as solvent for analysis. Sample was dissolved in the solvent and about 1 µℓ was spotted on chromarod(quarts rod having coated thin silica or alumina to separate and develop sample) specially designed for TLC-FID. Sample was developed in developing bath containing developing solvent for 20 minutes and fully dried with dry oven and then analyzed with TLC-FID.
Table 12

**[Table 12 ]**

| [Table ] | |
|---|---|
| TLC-FID apparatus | IATRON IATROSCAN MK-5 |
| Detector | FID(Flame Ionization Detect)FPD(Frame Photometric Detect) |
| Amount of sample | 1*µ*ℓ |
| Hydrogen gas flow rate | 160ml/min |
| Air flow rate | 2ml/min |
| Scan speed | 30sec |

Glyceride composition according to water content in mixture oil was analysed by using the difference of triglyceride content and diglyceride and monoglyceride content after the enzymatic interesterification in accordance with water consent in fat. The result of the analysis was shown in Table 13. As shown in the result, when water content in fat was below 0.02% before the enzymatic interesterification, hard butter having above 99% of triglyceride content and below 1% of diglyceride and monoglyceride content could be obtained.
Table 13

**[Table 13]**

| [Table ] | | |
|---|---|---|
| Water content in fat(%) | Triglyceride (%) | Di- and monoglyceride(%) |
| 0.01 | 99.3 | 0.7 |
| 0.02 | 99.2 | 0.8 |
| 0.05 | 98.7 | 1.3 |

The result of analysis for triglyceride, diglyceride and monoglyceride content in the hard butter and the cocoa butter equivalent which were synthesized in the present invention was shown in Table 14.
Table 14

**[Table 14]**

| [Table ] | | |
|---|---|---|
| | Triglyceride (%) | Di- and monoglyceride(%) |
| Hard butter | 99.2 | 0.8 |
| Cocoa butter equivalent of the present invention | 99.4 | 0.6 |
| Conventional cocoa butter equivalent | 99.4 | 0.6 |
| PMF | 99.5 | 0.5 |

### Industrial Applicability

The process for preparing cocoa butter equivalents of the present invention uses the continuous enzymatic interesterification in preparing oil of rich SOS, which is convenient in the reaction process than the conventional batch type process and can increase yield and purity of reaction and simplify processibility by separating triglyceride via molecular distillation and also can obtain hard butter containing desired triglyceride structure with high purity and yield by the selective extraction using solvent et al. Cocoa butter equivalents having similar triglyceride composition of natural cocoa butter is prepared by mixing the hard butter obtained by the process and various oil. Because the cocoa butter equivalents prepared by the process of the present invention is equivalent to import cocoa butter equivalent and natural cocoa butter in chemical composition and properties, it can replace them with 1:1 and also it can be used in the preparation of chocolate instead of natural cocoa butter without the difference in taste, properties et al.

## Claims

1. A method for preparing hard butter containing above 85% of SOS comprising the steps of
(a) mixing oils for preparing the hard butter with fatty acid or fatty acid ester;
(b) adding 1,3 regiospecific enzymes to the mixture obtained in the step of (a) to perform an interesterification reaction;
(c) distilling the reactants obtained in the step of (b) to remove fatty acid, ethyl ester, and monoglyceride and diglyceride formed after the reaction; and
(d) fractionally extracting the reactants obtained in the step of (c) to separate solid phase.

2. The method for preparing hard butter according to claim 1, wherein the oils for preparing hard of butter of the step of (a) are an oil or combination of two or more oils selected from the group consisting of completely hydrogenated soybean oil, completely hydrogenated suet, palm oil, palm stearin oil, palm olein oil, palm nuclei oil, palm nuclei olein oil, hydrogenated coconut oil, coconut oil, sal fat, sal stearin oil, kokum fat, shea butter, shea stearin oil, cottonseed stearin oil, soybean oil, corn oil, cottonseed oil, rape seed oil, canola oil, sunflower oil, safflower oil, grape seed oil or olive oil.

3. The method for preparing hard butter according to claim 1, wherein the combination ratio of the oil for preparing hard butter and fatty acid or fatty acid ester is 1.0:2.0 to 1.0:6.0.

4. The method for preparing hard butter according to claim 1, wherein the water content of the oil for preparing hard butter in the step (a) is below 0.02% and reaction temperature is 40 to 50°C.

5. The method for preparing hard butter according to claim 1, wherein the 1,3 regiospecific enzyme is Lipozyme TLIM.

6. The method for preparing hard butter according to claim 1, wherein the content of monoglyceride and diglyceride is below 1% and that of triglycride is above 99% by the step of (c).

7. The method for preparing hard butter according to claim 1, wherein the fatty acid or fatty acid ester removed from the step of (c) is recovered to recycle in the enzymatic interesterification via the hydrogenation.

8. The method for preparing hard butter according to claim 1, wherein the solid triglyceride in reactant obtained from the step of (d) contains above 85% of SOS and below 1% of SSS.

9. The method for preparing hard butter according to claim 8, wherein the liquid triglyceride contains less than 5% of SOS.

10. The method for preparing hard butter according to claim 9, wherein oil of triglyceride containing less than 5% of SOS content is recovered by the step of (d) and recycled in the enzymatic interesterification with continuous process.

11. A cocoa butter equivalent obtainable by the process according to claim 8 in which solid fat content in the cocoa butter equivalent is 82 to 90% at 10°C, 40 to 45% at 20°C, 9 to 14% at 25°C, 1 to 4% at 30°C and 0 to 0.50% at 35°C.

## Patentansprüche

1. Verfahren zur Herstellung von Hartbutter, die über 85% SOS enthält, umfassend die Schritte
(a) Mischen von Ölen zur Herstellung der Hartbutter mit Fettsäure oder Fettsäureester;
(b) Zugeben von 1,3-regiospezifischen Enzymen zu dem in Schritt (a) erhaltenen Gemisch, um eine Umesterungsreaktion durchzuführen;
(c) Destillieren der in Schritt (b) erhaltenen Reaktanten, um Fettsäure, Ethylester und Monoglycerid und Diglycerid, die gebildet wurden, nach der Reaktion zu entfernen und
(d) fraktioniertes Extrahieren der in Schritt (c) erhaltenen Reaktanten, um eine feste Phase abzutrennen.

2. Verfahren zur Herstellung von Hartbutter gemäß Anspruch 1, wobei die Öle zur Herstellung von Hartbutter des Schrittes (a) ein Öl oder eine Kombination aus zwei oder mehr Ölen, ausgewählt aus der Gruppe, bestehend aus vollständig hydriertem Sojabohnenöl, vollständig hydriertem Talg, Palmöl, Palmstearinöl, Palmoleinöl, Palmkernöl, Palmkernoleinöl, hydriertem Kokosnussöl, Kokosnussöl, Shorea-robusta-Fett, Shorea-robusta-Stearinöl, Kokamfett, Shea-Butter, Shea-Stearinöl, Baumwollsamen-Stearinöl, Sojabohnenöl, Maisöl, Baumwollsamenöl, Rapssamenöl, Canolaöl, Sonnenblumenöl, Safloröl, Traubenkernöl oder Olivenöl, sind.

3. Verfahren zur Herstellung von Hartbutter gemäß Anspruch 1, wobei das Kombinationsverhältnis des Öls zur Herstellung von Hartbutter und der Fettsäure oder des Fettsäureesters 1,0:2,0 bis 1,0:6,0 ist.

4. Verfahren zur Herstellung von Hartbutter gemäß Anspruch 1, wobei der Wassergehalt des Öls zur Herstellung von Hartbutter in Schritt (a) unter 0,02% ist und die Reaktionstemperatur 40 bis 50°C ist.

5. Verfahren zur Herstellung von Hartbutter gemäß Anspruch 1, wobei das 1,3-regiospezifische Enzym Lipozyme TLIM ist.

6. Verfahren zur Herstellung von Hartbutter gemäß Anspruch 1, wobei durch Schritt (c) der Gehalt an Monoglycerid und Diglycerid unter 1% und der an Triglycerid über 99% ist.

7. Verfahren zur Herstellung von Hartbutter gemäß Anspruch 1, wobei die Fettsäure oder der Fettsäureester, die/der aus Schritt (c) entfernt wird, zum Recyceln in der enzymatischen Umesterung durch die Hydrierung wiedergewonnen wird.

8. Verfahren zur Herstellung von Hartbutter gemäß Anspruch 1, wobei das feste Triglycerid in den Reaktanten, das aus Schritt (d) erhalten wird, über 85% SOS und unter 1% SSS enthält.

9. Verfahren zur Herstellung von Hartbutter gemäß Anspruch 8, wobei das flüssige Triglycerid weniger als 5% SOS enthält.

10. Verfahren zur Herstellung von Hartbutter gemäß Anspruch 9, wobei Triglyceridöl, das weniger als 5% SOS-Gehalt enthält, durch den Schritt (d) wiedergewonnen wird und in der enzymatischen Umesterung mit einem kontinuierlichen Verfahren recycelt wird.

11. Kakaobutteräquivalent, erhältlich durch das Verfahren gemäß Anspruch 8, wobei der Gehalt an festem Fett in dem Kakaobutteräquivalent 82 bis 90% bei 10°C, 40 bis 45% bei 20°C, 9 bis 14% bei 25°C, 1 bis 4% bei 30°C und 0 bis 0,50% bei 35°C ist.

## Revendications

1. Procédé de préparation de beurre dur contenant plus de 85 % de SOS comprenant les étapes suivantes
(a) mélange d'huiles pour préparer le beurre dur avec de l'acide gras ou de l'ester d'acide gras ;
(b) ajout d'enzymes régiospécifiques 1,3 au mélange obtenu à l'étape (a) pour effectuer une réaction d'interestérification ;
(c) distillation des réactifs obtenus à l'étape (b) pour éliminer l'acide gras, l'ester éthylique, et le monoglycéride et le diglycéride formés après la réaction ; et
(d) extraction fractionnelle des réactifs obtenus à l'étape (c) pour séparer la phase solide.

2. Procédé de préparation de beurre dur selon la revendication 1, dans lequel les huiles pour préparer le beurre dur de l'étape (a) sont une huile ou une combinaison de deux huiles ou plus choisie(s) dans le groupe constitué par l'huile de soja complètement hydrogénée, la suif complètement hydrogénée, l'huile de palme, l'huile stéarine de palme, l'huile oléine de palme, l'huile de noyaux de palme, l'huile oléine de noyaux de palme, l'huile de noix de coco hydrogénée, l'huile de noix de coco, la graisse de sal, l'huile stéarine de sal, la graisse de kokum, le beurre de karité, l'huile stéarine de karité, l'huile stéarine de graines de coton, l'huile de soja, l'huile de maïs, l'huile de graines de coton, l'huile de colza, l'huile de canola, l'huile de tournesol, l'huile de carthame, l'huile de pépins de raisins ou l'huile d'olive.

3. Procédé de préparation de beurre dur selon la revendication 1, dans lequel le rapport de combinaison de l'huile pour préparer du beurre dur et d'un acide gras ou ester d'acide gras est de 1,0:2,0 à 1,0:6,0.

4. Procédé de préparation de beurre dur selon la revendication 1, dans lequel la teneur en eau de l'huile pour préparer le beurre dur de l'étape (a) est inférieure à 0,02 % et la température de réaction est de 40 à 50°C.

5. Procédé de préparation de beurre dur selon la revendication 1, dans lequel l'enzyme régio-spécifique 1,3 est du Lipozyme TLIM.

6. Procédé de préparation de beurre dur selon la revendication 1, dans lequel la teneur en monoglycéride et en diglycéride est inférieure à 1 % et celle en triglycéride est supérieure à 99 % à l'étape (c).

7. Procédé de préparation de beurre dur selon la revendication 1, dans lequel l'acide gras ou l'ester d'acide gras éliminé à l'étape (c) est récupéré pour être recyclé dans l'interestérification enzymatique par hydrogénation.

8. Procédé de préparation de beurre dur selon la revendication 1, dans lequel le triglycéride solide dans le réactif obtenu à partir de l'étape (d) contient plus de 85 % de SOS et moins de 1 % de SSS.

9. Procédé de préparation de beurre dur selon la revendication 8, dans lequel le triglycéride liquide contient moins de 5 % de SOS.

10. Procédé de préparation de beurre dur selon la revendication 9, dans lequel l'huile de triglycéride ayant une teneur en SOS inférieure à 5 % est récupérée à l'étape (d) et recyclée dans l'inter-estérification enzymatique en continu.

11. Equivalent de beurre de cacao pouvant être obtenu par le procédé selon la revendication 8, dans lequel la teneur en matière grasse solide de l'équivalent de beurre de cacao est de 82 à 90 % à 10°C, de 40 à 45 % à 20°C, de 9 à 14 % à 25°C, de 1 à 4 % à 30°C et de 0 à 0,50 % à 35°C.
